# EUROPEAN PATENT APPLICATION

(11) **EP 4 763 313 A1**
(43) Date of publication of application: **24.06.2026**
(21) Application number: 25752166.6
(22) Date of filing: 05.02.2025
(51) Int. Cl.: B01D 53/22

(54) **METHOD FOR CONCENTRATION RECOVERY OF SPECIFIC COMPONENT IN FLUID UTILIZING RENEWABLE ENERGY AND DEVICE OF RENEWABLE ENERGY UTILIZATION TYPE FOR CONCENTRATION RECOVERY OF SPECIFIC COMPONENT IN FLUID**

(30) Priority: 06.02.2024 JP 2024025998
(71) Applicant: Solution Creators Inc., Tokyo 105-0013 (JP)
(72) Inventor: KAWABATA, Yasuharu, Tokyo 105-0013 (JP)
(74) Representative: Strehl & Partner mbB
(86) International application number: PCT/JP2025/003681
(87) International publication number: WO 2025/169940

(57) **Abstract**

The present invention concentrates and recovers a specific component contained in a fluid by utilizing renewable energy by concentrating a specific component contained in a fluid in a stepwise manner through plural separation membranes and discharging the same by means of a multistage or multi-cylinder type pump or plural pumps, which is provided with plural separation membranes on a suction port or supply piping of a fluid containing a specific component to be separated and concentrated, and is driven by being connected to a rotary shaft of a heat engine driven by a heat source of renewable energy, a hydraulic engine driven by flowing water or a wind power engine driven by wind power.

## Description

### Technical Field

The present invention relates to a method for concentration recovery of a specific component contained in a fluid and a device of a renewable energy utilization type for concentration recovery of a specific component in a fluid by applying the method, which concentrate and recover carbon dioxide contained in the atmosphere and combustion exhaust gases by utilizing a renewable energy without the emission of carbon dioxide associated with the use of fossil fuels or electricity derived from fossil fuels, or separate and recover carbon dioxide and methane from biogas.

### Background Art

While it is possible to generate electricity and use heat using renewable energy, there is a need for technology that effectively utilizes unused renewable energy in places where it is difficult to supply electricity through transmission lines or heat energy using heat conduits. In particular, as measures to prevent global warming and recover and reduce accumulated carbon dioxide in the atmosphere, efficient carbon dioxide separation and recovery technologies that utilize unused renewable energy are required.

As the technology that can solve these problems, a method using renewable energy such as geothermal steam and hot spring heat that does not increase carbon dioxide, river flowing water and biomass combustion heat to suck and compress air, combustion exhaust gas or biogas and supply thereof to a gas separation membrane to compress and cool the carbon dioxide gas contained in the air, combustion exhaust gas or biogas, to thereby recover carbon dioxide as liquefied carbon dioxide or dry ice (Patent Document 1) and a method for sucking and recovering carbon dioxide from air, combustion exhaust gas or biogas by providing a vacuum pump or suction blower driven by energy of geothermal fluid or flowing water in the flow path of carbon dioxide gas through the gas separation membrane (Patent Document 2) are disclosed.

### Citation List

### Patent Literature

Patent Document 1: Japanese Patent Application Laid-Open Publication No. 2023-10479
Patent Document 2: Japanese Patent Application Laid-Open Publication No. 2023-36490

### Disclosure of Invention

### Technical Problem

As described above, according to the conventional art described in Patent Document 1, it is possible to efficiently separate and recover carbon dioxide by utilizing renewable energy, and to recover thereof as liquefied carbon dioxide or dry ice, but there are following two problems in these technologies.

First, because both conventional arts have only one separation membrane for carbon dioxide, the concentration of carbon dioxide that can be recovered through the separation membrane is low, or the separation and recovery volume is reduced when separation and recovery is conducted with a higher concentration.

Normally, a separation membrane that separates and recovers specific components contained in gases or liquids have two performance indicators: selectivity, which is an indicator of the performance of recovering a specific component with high purity; and permeability, which is an indicator of the performance of recovering a large number of a specific component, and these two are in conflicting relationship, and thereby achieving full performance for both is difficult.

In other words, if a membrane with higher selectivity is selected, the permeability is lowered and the amount of separation and recovery is smaller, and it is impossible to eliminate all impurities in the separated and recovered fluid, whereas, if a membrane with higher permeability is selected, the amount of separation and recovery is increased, but selectivity is decreased, which leads to a high impurity content in the separated and recovered fluid, thereby reducing the concentration of specific components in the fluid.

In particular, in the technology for separating and recovering carbon dioxide contained in air and combustion exhaust gas disclosed in the conventional art, nitrogen, the main component of air and combustion exhaust gas, is contained in the separated and recovered carbon dioxide gas as an impurity, and in the technology for separating and recovering carbon dioxide from biogas, methane, the main component of biogas, is contained a lot as an impurity in the separated and recovered carbon dioxide gas, and since methods for removing these impurities or suppressing their entry have not been disclosed, in the case of separating and recovering carbon dioxide for commercial or industrial use, the gas quality deteriorates, reducing its utility value, and since both nitrogen and methane have physical properties that are more difficult to liquefy or solidify than carbon dioxide, in the case of liquefying or converting to dry ice for transportation or underground storage, the production process of liquefaction and conversion into dry ice is hindered, and production efficiency and quality of products are reduced.

On the other hand, to minimize the effects of impurities described above, the conventional art employs a separation membrane with high selectivity and low permeability, which increases the purity of the carbon dioxide gas to be separated and recovered, and makes liquefaction and conversion into dry ice easier, but there is a problem that the production volume is limited by the decreased separation and recovery amounts.

In order to solve these problems, one method is to pass plural separation membranes with low selectivity and high permeability in a multi-layered way to increase the concentration of specific components in the separated and recovered fluid in stages while maintaining the separation and recovery amounts, or by using a separation membrane with low selectivity and high permeability first to separate and recover a large amount of fluid containing specific components, and by passing this fluid through the second stage and subsequent stages while changing the characteristics of the separation membrane in stepwise to have higher selectivity and lower permeability to increase the concentration of separation and recovery while suppressing the reduction in separation and recovery amounts; however, in the conventional arts, the method of increasing the purity of the separation and recovery while maintaining the separation and recovery amounts by concentration by passing the fluid through the plural separation membranes in a multi-layered way or by passing through the combined separation membranes with different selectivity and permeability is not disclosed, and thereby realization is impossible.

In addition, since renewable energy used as the driving source for gas separation and recovery in the conventional arts is limited to geothermal heat, biomass combustion heat or water flow, and methods using solar heat or wind power as the driving source are not disclosed, the conventional arts are only applicable in areas with geothermal, biomass, and hydropower resources, and cannot be applied to areas with abundant solar radiation amount or wind conditions.

On the other hand, solar energy cannot generate power or collect heat at night, and the amount of power generated or collected heat is not stable depending on the season and weather, and as for wind energy, since wind conditions change depending on the season and weather, the driving force for separating and recovering specific components in the fluid fluctuates and there is also a problem that the energy used to compress and cool the separated and recovered components fluctuates; however, it is possible to separate and recover carbon dioxide from the outside air in a wide range of areas, if, as for the solar energy, a method using solar heat having a higher energy conversion efficiency than solar power generation, and making it possible to supply energy continuously day and night through heat storage materials and heat medium circulation is applied, or if a method performed only in the area where wind power energy is permanently obtained or a method only operated during seasons when constant wind power energy is obtained is applicable, but conventional arts do not disclose these methods.

### Solution to Problem

The present invention has been made in light of the above problems, and an object thereof is to provide a method for concentration recovery of a specific component in a fluid utilizing renewable energy and a device of a renewable energy utilization type for concentration recovery of a specific component in a fluid applying the above method, which concentrate and recover specific components contained in fluids, while maintaining the separation and recovery amounts, through the use of renewable energies, including solar heat and wind power, in addition to geothermal heat and biomass combustion heat.

To solve the above-described problems, the invention described in claim 1 concentrates and recovers a specific component contained in a fluid through plural separation membranes by including: a heat engine utilizing any of geothermal fluid, biomass combustion heat, and solar heat as a heat source; and a multistage or multi-cylinder type pump, which is connected directly or via a transmission to a rotary shaft of the heat engine to be driven and including the plural separation membranes for separating the specific component contained in the fluid, the pump being located at a suction port or a suction piping of the fluid, with a discharge port from a first stage or first cylinder being connected to a suction port of a second or any of subsequent stages or cylinders.

The invention described in claim 2 concentrates and recovers a specific component contained in a fluid through plural separation membranes by including: a hydraulic engine driven by water flow as an energy source; and a multistage or multi-cylinder type pump, which is connected directly or via a transmission to a rotary shaft of the hydraulic engine and including the plural separation membranes for separating the specific component contained in the fluid, with a discharge port of a first stage or first cylinder being connected to a suction port of a second or any of subsequent stages or cylinders.

The invention described in claim 3 concentrates and recovers a specific component contained in a fluid through plural separation membranes by including: a wind power engine driven by wind power as an energy source; and a multistage or multi-cylinder type pump, which is connected directly or via a transmission to a rotary shaft of the wind power engine and including the plural separation membranes for separating the specific component contained in the fluid, with a discharge port of a first stage or first cylinder being connected to a suction port of a second or any of subsequent stages or cylinders.

The invention described in claim 4 concentrates and recovers a specific component contained in a fluid through plural separation membranes by including: a heat engine utilizing any of geothermal fluid, biomass combustion heat, and solar heat as a heat source; and plural pumps, each of which includes a separation membrane for separating the specific component contained in the fluid, connected directly or via a transmission to a rotary shaft of the heat engine and located on a suction port or supply piping of the fluid, with a discharge port of the pump being connected to a suction port of a second or any of subsequent pumps.

The invention described in claim 5 concentrates and recovers a specific component contained in a fluid through plural separation membranes by including: a hydraulic engine driven by water flow as an energy source; and plural pumps, each of which includes a separation membrane for separating the specific component contained in the fluid, connected directly or via a transmission to a rotary shaft of the hydraulic engine and located on a suction port or supply piping of the fluid, with a discharge port of the pump being connected to a suction port of a second or any of subsequent pumps.

The invention described in claim 6 concentrates and recovers a specific component contained in a fluid through plural separation membranes by including: a wind power engine driven by wind power as an energy source; and plural pumps, each of which includes a separation membrane for separating the specific component contained in the fluid, connected directly or via a transmission to a rotary shaft of the wind power engine and located on a suction port or supply piping of the fluid, with a discharge port of the pump being connected to a suction port of a second or any of subsequent pumps.

The invention described in claim 7 provides plural separation membranes described in claims 1 to 6, the membranes being arranged from a suction port of a fluid and upstream side toward a discharge port, where a specific component is separated and concentrated from the fluid, and downstream side, so that permeability of the separation membrane for separating and recovering the specific component gradually decreases while the selectivity thereof gradually increases.

The invention described in claim 8 further provides a compressor located at a discharge port of the multistage or multi-cylinder type pump described in claims 1 to 3, or at a discharge port of a most downstream pump among the plural pumps described in claims 4 to 6, the compressor connected directly or via a transmission to the rotary shaft described in claims 1 to 3 or 4 to 6, and compressing a specific component separated and concentrated from the fluid discharged from the discharge port, and thereby the separated and concentrated specific component is pressurized or liquefied to be recovered as a high-pressure gas or liquid.

In the invention described in claim 9, the heat engine described in claim 1 or 4 is a turbine-type or reciprocating-type steam engine using any of geothermal fluid, biomass combustion heat, and solar heat as a heat source, or a turbine-type or reciprocating-type combustion engine driven by combustion energy of biomass fuel.

In the invention described in claim 10, the pump described in claims 1 to 6 is either a positive displacement pump classified as a reciprocating pump or rotary pump, or a non-positive displacement turbo pump classified as a centrifugal pump, mixed-flow pump, or axial-flow pump.

In the invention described in claim 11, the compressor described in claim 8 is either a positive displacement compressor, which is classified as any of a reciprocating, swash plate, diaphragm, screw, scroll, rotary, rotary piston and slide vane compressor, or a non-positive displacement turbo compressor of a centrifugal or axial-flow type.

The invention described in claim 12 provides a heat exchanger at a discharge port of the pump described in claims 1 to 6 or within a piping flow path of a discharged fluid, or at a discharge port of a compressed fluid from the compressor described in claim 8 or within a piping flow path of the compressed fluid, wherein the heat exchanger is supplied with at least one of cold heat held by river water, lake water or seawater, and cold heat held by geothermal heat, groundwater heat, or snow and ice heat, or a radiator fan is provided to recover a specific component concentrated and recovered from a fluid by cooling the specific component to lower the temperature thereof by outside air or by condensation liquefying or solidifying the specific component.

The invention described in claim 13 provides a heat exchanger at a discharge port of the pump described in claim 1 or 4 or within a piping flow path of a discharged fluid, and further provides an absorption chiller or adhesion chiller driven by high-temperature heat held by hot water drained from a gas-liquid separator of the geothermal fluid described in claim 1 or 4, or steam, warm water or a heat medium obtained after driving the heat engine described in claim 1 or 4 as a heat source, wherein cold heat obtained by the chiller is supplied to the heat exchanger to recover a specific component concentrated and recovered from a fluid by cooling the specific component to lower the temperature thereof or by condensation liquefying or solidifying the specific component.

The invention described in claim 14 provides a heat exchanger at a discharge port of the pump described in claim 2 or 5 or within a piping flow path of a discharged fluid wherein cold heat obtained from flowing water after driving the hydraulic engine described in claim 2 or 5 is supplied to the heat exchanger to recover a specific component concentrated and recovered from a fluid by cooling the specific component to lower the temperature thereof or by condensation liquefying or solidifying the specific component.

The invention described in claim 15 provides at least one of a radiator dissipating heat in outside air and an electric heat pump chiller at a discharge port of the pump described in claim 3 or 6 or within a piping flow path of a discharged fluid, to recover a specific component concentrated and recovered from a fluid by cooling the specific component to lower the temperature thereof or by condensation liquefying or solidifying the specific component by dissipating heat or delivering cold air.

The invention described in claim 16 provides, in the method for concentration recovery of a component in a fluid described in claims 1 to 15: a measuring instrument located at a discharge port of a pump or compressor, within a piping flow path of a discharged fluid, or within a flow path of piping discharging a non-specific component that does not pass through a separation membrane, the measuring instrument measuring at least one of temperature, pressure, flow rate, and concentration of a concentrated and recovered fluid or a fluid of the non-specific component generated in a process of concentration recovery; at least one flow rate control valve located at a suction port, outlet, or within a piping flow path where the concentrated and recovered fluid or the fluid of the non-specific component generated in the process of concentration recovery flows; and further, a control unit controlling at least one of the temperature, pressure, flow rate, and concentration of a component in a fluid being concentrated and recovered by controlling opening of the flow rate control valve based on a measurement value obtained from the measuring instrument.

The invention described in claim 17 further provides a steam turbine generator or binary generator driven by high-temperature heat held by hot water drained from a gas-liquid separator for the geothermal fluid described in claim 1 or 4, or steam, warm water, or a heat medium obtained after driving the heat engine described in claim 1 or 4, wherein power obtained from the generator is supplied to at least any one of the absorption chiller and adhesion chiller described in claim 13, the measuring instrument, flow rate control valve, and control unit described in claim 16.

The invention described in claim 18 further provides a hydraulic generator driven by flowing water after driving the hydraulic engine described in claim 2 or 5, wherein power obtained from the generator is supplied to at least any one of a water pump supplying flowing water to the heat exchanger described in claim 14, the measuring instrument, flow rate control valve, and control unit described in claim 16 for operating thereof.

The invention described in claim 19 further provides a wind power generator near the wind power engine described in claim 3 or 6, wherein power obtained from the generator is supplied to at least any one of a blast fan mounted on the radiator, electric heat pump chiller described in claim 15, the measuring instrument, flow rate control valve, and control unit described in claim 16 for operating thereof.

In the invention described in claim 20, the fluid supplied to the suction port of the pump described in claims 1 to 6 is any of biogas, combustion exhaust gas and air, and the separation membrane described in claims 1 to 7 is either a carbon dioxide separation membrane or a methane separation membrane.

The invention described in claim 21 is a device of renewable energy utilization type for concentration recovery of a specific component in a fluid that separates, concentrates and recovers a specific component contained in a fluid by utilizing renewable energy by applying the method for concentration recovery of a component in a fluid utilizing renewable energy described in claims 1 to 20.

### Advantageous Effects of Invention

According to the present invention, utilizing a wide range of renewable energies, including solar heat and wind power, without being limited to geothermal steam, biomass combustion heat or hydropower, it is possible to concentrate specific components contained in a fluid and separate and recover thereof with high purity not only from gases such as air containing carbon dioxide, combustion exhaust gas, and biogas, but also from various fluids including liquids containing the specific components.

### Brief Description of Drawings

FIG. 1 is a schematic diagram showing a device for the liquefaction recovery of carbon dioxide originating from biomass combining a methane fermentation system for biomass and a geothermal energy multistage utilization device for the concentration recovery of carbon dioxide, which is the first embodiment related to the present invention;
FIG. 2 is a schematic diagram showing a device for the liquefaction recovery of carbon dioxide originating from biomass combining a steam turbine driven by a woody biomass combustion boiler and a carbon dioxide concentration and recovery device from boiler exhaust gas, which is the second embodiment related to the present invention;
FIG. 3 is a schematic diagram showing a liquefaction recovery device for carbon dioxide in the air concentrating and recovering to liquefy carbon dioxide in the air by a solar heat utilization steam turbine drive, which is the third embodiment related to the present invention;
FIG. 4 is a schematic diagram showing a liquefaction recovery device for carbon dioxide in the air concentrating and recovering to liquefy carbon dioxide in the air by a water turbine drive, which is the fourth embodiment related to the present invention; and
FIG. 5 is a schematic diagram showing a liquefaction recovery device for carbon dioxide in the air concentrating and recovering to liquefy carbon dioxide in the air by a wind turbine drive, which is the fifth embodiment related to the present invention.

### Description of Embodiments

The best modes for embodying the present invention will be described below with reference to the drawings. Note that the scope of the present invention is defined by the appended claims and is not limited to the present embodiments.

### (First embodiment)

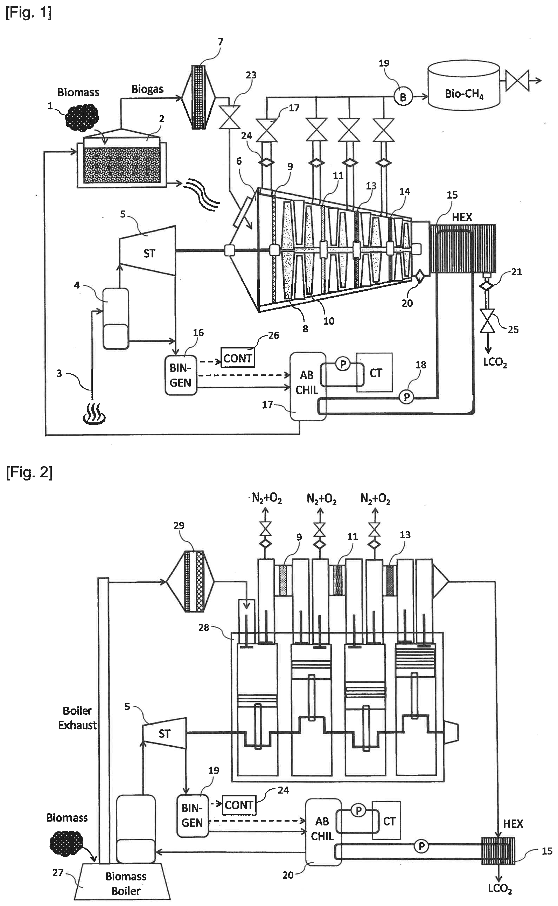

First, the device for the liquefaction recovery of carbon dioxide originating from biomass combining a methane fermentation system for biomass and a device of a geothermal energy multistage utilization type for the concentration recovery of carbon dioxide, which is related to the first embodiment of the present invention, is described based on FIG. 1.

As shown in FIG. 1, this device is constituted by a high-temperature methane fermentation tank 2 that generates biogas containing methane and carbon dioxide as main components by anaerobic methane fermentation bacteria from biomass resources 1 for methane fermentation of food residues, agricultural non-edible parts, livestock excrements, etc., and a device of a geothermal energy multistage utilization type for the concentration recovery of carbon dioxide that separates and concentrates carbon dioxide contained in the biogas generated from the methane fermentation tank 2 through plural carbon dioxide separation membranes to recover thereof as biomethane and liquefied carbon dioxide.

Here, the above-described device of a geothermal energy multistage utilization type for the concentration recovery of carbon dioxide is equipped with: a steam turbine 5 driven by geothermal steam obtained by introducing a geothermal fluid 3 containing geothermal steam and hot water into a gas-liquid separator 4, which separates the geothermal fluid into high-temperature, high-pressure geothermal steam and hot water; a multistage type carbon dioxide concentration recovery unit 6 of geothermal steam turbine-driven, which is constituted by plural rotor blades directly connected to a rotary drive shaft of the steam turbine to be rotary driven, static blades in an airtight pressure vessel, and plural carbon dioxide separation membranes provided inside the vessel; and a heat exchanger cooling and liquefying high-purity and high-pressure carbon dioxide gas discharged from the outlet of the device by cold water obtained using geothermal energy.

In addition, this device is configured to enable to extract, collect and store biomethane, which is a separation membrane off-gas produced in each compression and concentration process of the above-described multistage type carbon dioxide concentration recovery unit 6, and to supply highly concentrated carbon neutral methane, in which carbon dioxide, that is inert gas, is removed, as fuel, thus making it possible to supply biogas originating from biomass as biomethane, which is highly flammable and combustible with increased calorific value, and liquefied carbon dioxide suitable for transportation and use.

Note that, in the multistage type carbon dioxide concentration recovery unit 6 described above, biogas is supplied through a biogas purification filter 7 that removes hydrogen sulfide and excessive humidity from the biogas generated from the high-temperature methane fermentation tank 2, and, when a suction compression rotor blade 8 of the first stage rotates by the rotational drive force of the steam turbine 5 to suck and compress biogas from the suction port, the biogas passes through a first carbon dioxide separation membrane 9 provided at the suction port, and thereby the carbon dioxide gas in the biogas is selectively sucked and compressed to be supplied to a suction compression rotor blade 10 of the second stage.

Furthermore, the carbon dioxide gas discharged from the suction compression rotor blade 10 of the second stage is made to pass through the second carbon dioxide separation membrane 11, which has higher selectivity but lower permeability compared to the first carbon dioxide separation membrane 9 and requires gas supply and suction at higher pressure, and then supplied and sucked to the third stage, which leads to the supply of carbon dioxide gas with a higher purity and higher pressure than that from the second stage to a suction port of the third stage.

In the same way, the carbon dioxide gas discharged from the suction compression rotor blade of the third stage is made to pass through a third carbon dioxide separation membrane 13, which has higher selectivity but lower permeability compared to the second carbon dioxide separation membrane 11 and requires gas supply and suction at higher pressure, and then, the carbon dioxide gas discharged from the suction compression rotor blade of the third stage is made to pass through a fourth carbon dioxide separation membrane 14, which has higher selectivity but lower permeability compared to the third carbon dioxide separation membrane 13 and requires gas supply and suction at higher pressure. Provided with highly selective carbon dioxide separation membranes, which are selected by stages, with which the pressure of the separated and recovered carbon dioxide gas increases as the process proceeds to later stages and high-pressure gas supply and high suction force are required, the device is configured to discharge the carbon dioxide gas from the final stage thereof as high-pressure, high-purity carbon dioxide gas suitable for a cooling and liquefaction process in a water-cooled heat exchanger 15.

In addition, this device is configured such that the low-temperature steam discharged from the steam turbine 5 after driving the turbine and the high-temperature water supplied from the gas-liquid separator 4 are supplied to a binary power generation facility 16 to carry out renewable energy power generation, and then the obtained power is supplied to: an absorption chiller 17 driven by the low-temperature steam and hot water after operating the binary power generation facility, and a cooling tower, which is an ancillary facility of the absorption chiller; a cold water circulation pump 18 for circulating cold water from the chiller to the water-cooled heat exchanger 15; a gas blower 19 for biomethane recovery and storage; measuring units 20, 21 and 22 that measure the temperature, concentration and flow rate of recovered carbon dioxide gas, liquefied carbon dioxide, and biomethane that is extracted and recovered as off-gas; flow rate control valves 23, 24 and 25 that control the biogas supply volume, off-gas recovery volume, and liquefied carbon dioxide recovery flow rate based on data obtained from the measuring units; and a control unit 26 that controls the opening of these control valves according to the measurement results of the above-described measuring units.

Here, it is desirable that the opening of the flow rate control valve using the control unit of this device is adjusted to maximize the concentration or flow rate of the carbon dioxide gas to be concentrated and recovered in response to the flow rate and concentration of the carbon dioxide gas to be concentrated and recovered and the pressure and flow rate in the gas flow path of the biomethane to be extracted and recovered; for example, when the gas flow path pressure of the biomethane being extracted and recovered becomes excessively high, impurities are more likely to contaminate as those passing through the separation membrane, and therefore, when the concentration of the concentrated and recovered carbon dioxide gas decreases, the opening of the flow rate control valve provided in the biomethane gas flow path being extracted and recovered is increased to lower the pressure and increase the amount of biomethane extracted, which makes it possible to increase the concentration of carbon dioxide to be separated and concentrated while increasing the amount of biomethane to be extracted and recovered.

Moreover, it becomes possible to operate biogas component separation and carbon dioxide concentration and recovery using geothermal energy without carbon dioxide emissions by configuring the device so that the hot water after the operation of the absorption chiller is used to heat and maintain the high-temperature methane fermentation tank 2, which promotes methane fermentation, and is then drained, and by configuring the device so that the geothermal energy is effectively utilized in multiple stages: the steam turbine drive for biogas separation and concentration, the binary power generation facility for supplying power for the system operation, the absorption chiller drive for liquefying the separated and concentrated carbon dioxide, and heating the methane fermentation tank.

### (Second embodiment)

Next, the device for the liquefaction recovery of carbon dioxide originating from biomass combining a woody biomass combustion boiler and a device for concentration recovery of carbon dioxide from boiler combustion exhaust gases, which is related to the second embodiment of the present invention, is described based on FIG. 2.

As shown in FIG. 2, the device of the second embodiment differs in that, by a multi-cylinder carbon dioxide concentration recovery and compression unit 28, which is driven by a crankshaft connected to the rotary shaft of the steam turbine 5 operating with steam generated by supplying the woody biomass to the boiler 27 as a heat source, the combustion exhaust gas generated from the boiler is compressed and supplied to each cylinder, and carbon dioxide in the combustion exhaust gas is concentrated and compressed when passing through the separation membranes 9, 11 and 13.

In addition, this device is provided with a woody biomass combustion exhaust gas purification unit 29, such as a bag filter or an electric dust collector, in order to remove dust and other components, such as tar, contained in the exhaust gas from woody biomass combustion together with sulfur oxides and nitrogen oxides in advance and supply to a concentration recovery compressor, and since the off-gas generated by the separation membrane between each cylinder is primarily composed of nitrogen and oxygen, which can be vented to the atmosphere, the off-gas from each cylinder is extracted at the appropriate time by open/close control of electromagnetic valves or a cam mechanism via the crankshaft to directly vent the off-gas to the atmosphere without recovering the extraction, which is also the different point.

With a configuration like this, in the carbon dioxide concentration recovery process via separation membranes, without providing large-area separation membranes, as a piston reciprocating compression engine with higher suction compression efficiency than a non-positive displacement turbine compressor, it becomes possible to efficiently concentrate and recover carbon dioxide in the combustion exhaust gas originating from the woody biomass as liquefied carbon dioxide.

Note that, also in this configuration, the separation membranes provided in the connecting distribution parts between multiple cylinders are composed of plural separation membranes with the same characteristics from upstream to downstream in a multi-layered way; however, it is preferable to provide the membrane with the highest permeability and low selectivity at the most upstream, and to gradually provide the membranes with high selectivity and low permeability from the second and subsequent layers, which is the same as the first embodiment.

### (Third embodiment)

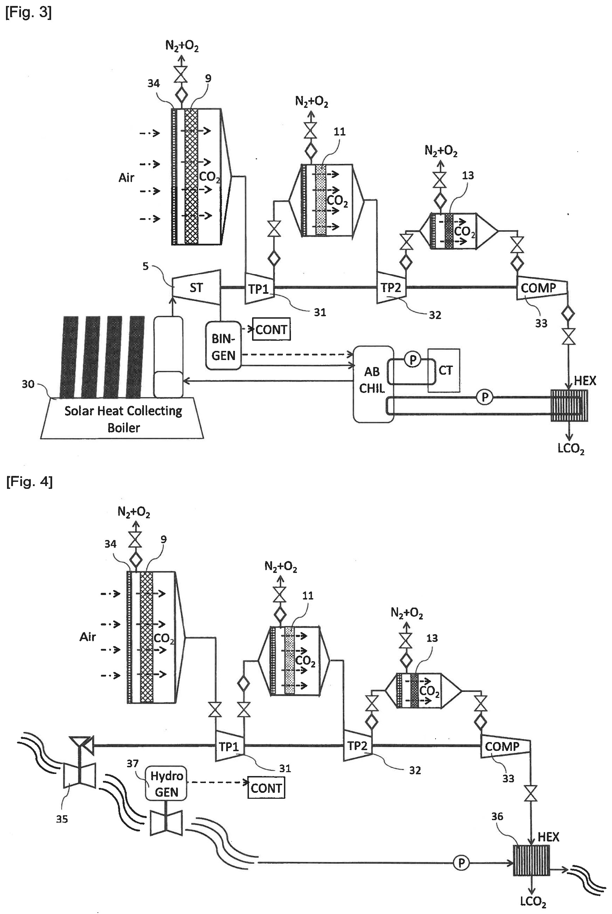

Next, a liquefaction recovery device for carbon dioxide in the air concentrating and recovering to liquefy carbon dioxide in the air by a solar heat utilization steam turbine drive, which is the third embodiment of the present invention, is described using FIG. 3.

As shown in FIG. 3, since this device separates and concentrates carbon dioxide in the air using solar thermal energy, whose available energy whose available energy that can be utilized fluctuates depending on the time of day or night, weather, and season, and recovers thereof as liquefied carbon dioxide, air purified and supplied through an air suction dust removal filter 34 is concentrated and pressurized in stages via the carbon dioxide separation membranes 9, 11, and 13 through a first stage turbo pump 31, a second stage turbo pump 32, and a turbo compressor 33 that pressurizes concentrated and recovered carbon dioxide, which are connected to the rotary shaft of the steam turbine 5, which is driven by a continuous supply of solar thermal energy through a circulating heat medium from a solar heat collection system 30 provided with a heat medium storage tank, to thereby generate high-purity high-pressure carbon dioxide gas, which process differs from other embodiments, but the rest is similar.

With the embodiment like this, in locations sunlight can be obtained, it becomes possible to efficiently separate and recover carbon dioxide from the outside air on-site, and concentrate thereof for liquefaction and recovery without relying on renewable energy resources regionally unevenly distributed, such as geothermal heat and hydraulic power, and it becomes also possible to simultaneously concentrate and recover carbon dioxide in the air in a wide range of areas to realize fixation and resource utilization.

### (Fourth embodiment)

Next, a liquefaction recovery device for carbon dioxide in the air concentrating and recovering to liquefy carbon dioxide in the air by a water turbine drive, which is the fourth embodiment of the present invention, is described using FIG. 4.

As shown in FIG. 4, this device adopts the method of concentrating, recovering, and liquefying carbon dioxide contained in the air by using turbo pumps provided with plural separation membranes and a compressor, which is similar to other embodiments, but differs in that the device utilizes flowing water energy from rivers and cold heat from river water as the driving source.

In other words, the configuration of this device differs in that: the driving force of the turbo pumps to supply gas to plural separation membranes and the compressor to pressurize separated and concentrated carbon dioxide gas directly utilizes the rotational power of a waterwheel-type rotational force transmission unit 35 installed on the river flow path; and, for cooling concentrated high-pressure carbon dioxide gas, a gas cooling unit 36 performing heat exchange with river water is utilized, and renewable energy electricity generated by a hydropower generation facility 37, which generates power from the water flow after driving the waterwheel-type rotational force transmission unit 35, is utilized as a drive power supply for pump driving with flowing water cooling, as well as for the measuring units measuring temperature, pressure, and flow rate of each part of the system, and the control valves.

With the configuration like this, it becomes possible to concentrate carbon dioxide in the air and recover thereof as liquefied carbon dioxide even in areas that do not have geothermal or biomass resources but are blessed with hydropower resources.

### (Fifth embodiment)

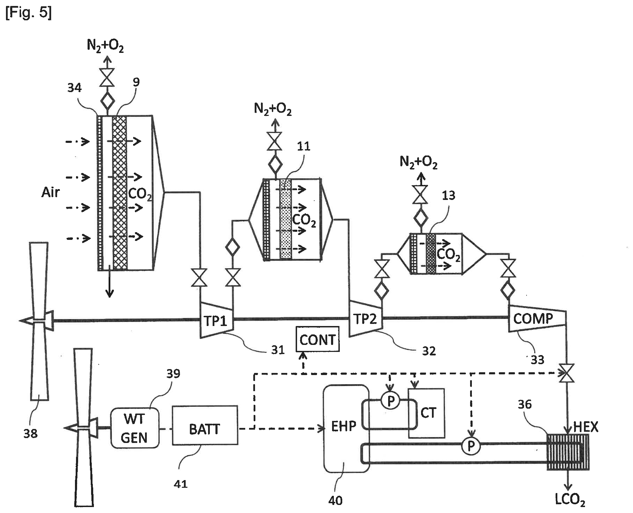

Next, a liquefaction recovery device for carbon dioxide in the air concentrating and recovering to liquefy carbon dioxide in the air by a wind turbine drive, which is related to the fifth embodiment of the present invention, is described using FIG. 5.

As shown in FIG. 5, the point that carbon dioxide in the air is separated, concentrated and liquefied is similar in the fifth embodiment, but the driving force of the turbo pumps, when concentrating and recovering through plural separation membranes, and the compressor is a windmill-type rotational force transmission unit 38; therefore, the operation of this device is limited to a certain level of stable operation of windmills, which is a different point.

Another different point is that the cold heat supply method for cooling and liquefaction of concentrated and recovered high-pressure carbon dioxide gas is carried out by an electric heat pump chiller 40 that operates on the power supplied by a wind power generation facility 39 located near the above-described windmill-type rotational force transmission unit 38 for operating the carbon dioxide separation and concentration unit.

Note that the operation of the device in the fifth embodiment will be limited to a certain level of stable operation of the wind turbine; therefore, to ensure the stable continuous operation of the cold heat supply for liquefying concentrated high-pressure carbon dioxide, as well as the measuring instruments and control systems for temperatures, gas concentrations, flow rates, etc., of each part of the entire system, it is desirable to provide a large-capacity power storage facility 41 alongside the wind power generation facility 39 to enable for charging and discharging power.

With the embodiment like this, it becomes possible to liquefy and recover carbon dioxide from the air with high efficiency in areas without geothermal or hydropower resources, but with stable wind speeds necessary to operate the device.

As described above, in accordance with the various renewable energy dispersed across areas, it becomes possible to concentrate and recover carbon dioxide emissions from the combustion exhaust gases associated with the use of power generation facilities and heat utilization facilities to suppress atmospheric dissipation, and to efficiently recover carbon dioxide originating from biomass and carbon dioxide in the air as liquefied carbon dioxide, to be thereby injected into the ground, etc., to be fixed, or used for commercial and industrial applications such as dry ice, as well as transported and used as a raw material for producing carbon-neutral fuels.

In addition, not limited to geothermal, hydropower, and biomass resource areas where continuous operation is possible regardless of day, night or weather, but also in a wide range of areas, including areas where solar heat and wind power resources can be used, it becomes possible to concentrate carbon dioxide contained in the atmosphere and recover thereof as liquefied carbon dioxide that can be easily transported and used according to local renewable energy resources.

### (Industrial Applicability)

The present invention is not limited to the above-described embodiments, for example, not limited to the separation of biogas components, the separation and recovery of carbon dioxide contained in combustion exhaust gases, or air; the present invention is applicable to the concentration and recovery of specific components from a liquid mixed with various components through separation membranes, to the cooling and solidification of concentrated and recovered liquid components, as well as the conversion of liquefied carbon dioxide into dry ice by adiabatic expansion and transportation as solid carbon dioxide.

Thus, the above-described embodiments are merely examples, and any configuration that is substantially the same as the technical concept described in the claims of the present invention and that achieves similar effects is included within the scope of the present invention.

### Reference Signs List

1 Biomass resources
2 High-temperature methane fermentation tank
3 Geothermal fluid
4 Gas-liquid separator
5 Steam turbine
6 Multistage type carbon dioxide concentration recovery unit
7 Biogas purification filter
8 First-stage suction compression rotor blade
9 First carbon dioxide separation membrane
10 Second-stage suction compression rotor blade
11 Second carbon dioxide separation membrane
12 Third-stage suction compression rotor blade
13 Third carbon dioxide separation membrane
14 Fourth carbon dioxide separation membrane
15 Water-cooled heat exchanger
16 Binary power generation facility
17 Adhesion chiller
18 Refrigerant circulation pump
19 Biomethane gas blower
20 Carbon dioxide gas characteristics measuring unit
21 Liquefied carbon dioxide characteristics measuring unit
22 Extracted and recovered biomethane characteristics measuring unit
23 Biogas supply flow rate control valve
24 Off-gas recovery flow rate control valve
25 Liquefied carbon dioxide recovery flow rate control valve
26 Multistage type carbon dioxide concentration recovery control unit
27 Woody biomass boiler
28 Multi-cylinder carbon dioxide concentration recovery and compression unit
29 Woody biomass combustion exhaust gas purification unit
30 Solar heat collection system
31 First-stage turbo pump
32 Second-stage turbo pump
33 Carbon dioxide gas pressurization turbo compressor
34 Air suction dust removal filter
35 Waterwheel-type rotational force transmission unit
36 Gas cooling unit
37 Hydropower generation facility
38 Windmill-type rotational force transmission unit
39 Wind power generation facility
40 Electric heat pump chiller
41 Large-capacity power storage facility

## Claims

1. A method for concentration recovery of a component in a fluid, which concentrates and recovers a specific component contained in a fluid through a plurality of separation membranes by comprising: a heat engine utilizing any of geothermal fluid, biomass combustion heat, and solar heat as a heat source; and a multistage or multi-cylinder type pump, which is connected directly or via a transmission to a rotary shaft of the heat engine to be driven and including the plurality of separation membranes for separating the specific component contained in the fluid, the pump being located at a suction port or a suction piping of the fluid, with a discharge port from a first stage or first cylinder being connected to a suction port of a second or any of subsequent stages or cylinders.

2. A method for concentration recovery of a component in a fluid, which concentrates and recovers a specific component contained in a fluid through a plurality of separation membranes by comprising: a hydraulic engine driven by water flow as an energy source; and a multistage or multi-cylinder type pump, which is connected directly or via a transmission to a rotary shaft of the hydraulic engine and including the plurality of separation membranes for separating the specific component contained in the fluid, with a discharge port of a first stage or first cylinder being connected to a suction port of a second or any of subsequent stages or cylinders.

3. A method for concentration recovery of a component in a fluid, which concentrates and recovers a specific component contained in a fluid through a plurality of separation membranes by comprising: a wind power engine driven by wind power as an energy source; and a multistage or multi-cylinder type pump connected directly or via a transmission to a rotary shaft of the wind power engine and including the plurality of separation membranes for separating the specific component contained in the fluid, with a discharge port of a first stage or first cylinder being connected to a suction port of a second or any of subsequent stages or cylinders.

4. A method for concentration recovery of a component in a fluid, which concentrates and recovers a specific component contained in a fluid through a plurality of separation membranes by comprising: a heat engine utilizing any of geothermal fluid, biomass combustion heat, and solar heat as a heat source; and a plurality of pumps, each of which includes a separation membrane for separating the specific component contained in the fluid, connected directly or via a transmission to a rotary shaft of the heat engine and located on a suction port or supply piping of the fluid, with a discharge port of the pump being connected to a suction port of a second or any of subsequent pumps.

5. A method for concentration recovery of a component in a fluid utilizing renewable energy heat, which concentrates and recovers a specific component contained in a fluid through a plurality of separation membranes by comprising: a hydraulic engine driven by water flow as an energy source; and a plurality of pumps, each of which includes a separation membrane for separating the specific component contained in the fluid, connected directly or via a transmission to a rotary shaft of the hydraulic engine and located on a suction port or supply piping of the fluid, with a discharge port of the pump being connected to a suction port of a second or any of subsequent pumps.

6. A method for concentration recovery of a component in a fluid utilizing renewable energy heat, which concentrates and recovers a specific component contained in a fluid through a plurality of separation membranes by comprising: a wind power engine driven by wind power as an energy source; and a plurality of pumps, each of which includes a separation membrane for separating the specific component contained in the fluid, connected directly or via a transmission to a rotary shaft of the wind power engine and located on a suction port or supply piping of the fluid, with a discharge port of the pump being connected to a suction port of a second or any of subsequent pumps.

7. A method for concentration recovery of a component in a fluid utilizing renewable energy, wherein a plurality of separation membranes described in claims 1 to 6 is provided, the membranes being arranged from a suction port of a fluid and upstream side toward a discharge port, where a specific component is separated and concentrated from the fluid, and downstream side, so that permeability of the separation membrane for separating and recovering the specific component gradually decreases while the selectivity thereof gradually increases.

8. A method for concentration recovery of a component in a fluid utilizing renewable energy, wherein a compressor located at a discharge port of a multistage or multi-cylinder type pump described in claims 1 to 3, or at a discharge port of a most downstream pump among the plurality of pumps described in claims 4 to 6 is further provided, the compressor connected directly or via a transmission to a rotary shaft described in claims 1 to 3 or 4 to 6, and compressing a specific component separated and concentrated from the fluid discharged from the discharge port, and thereby the separated and concentrated specific component is pressurized or liquefied to be recovered as a high-pressure gas or liquid.

9. A method for concentration recovery of a component in a fluid utilizing renewable energy, wherein a heat engine described in claim 1 or 4 is a turbine-type or reciprocating-type steam engine using any of geothermal fluid, biomass combustion heat, and solar heat as a heat source, or a turbine-type or reciprocating-type combustion engine driven by combustion energy of biomass fuel.

10. A method for concentration recovery of a component in a fluid utilizing renewable energy, wherein a pump described in claims 1 to 6 is either a positive displacement pump classified as a reciprocating pump or rotary pump, or a non-positive displacement turbo pump classified as a centrifugal pump, mixed-flow pump, or axial-flow pump.

11. A method for concentration recovery of a component in a fluid utilizing renewable energy, wherein a compressor described in claim 8 is either a positive displacement compressor, which is classified as any of a reciprocating, swash plate, diaphragm, screw, scroll, rotary, rotary piston and slide vane compressor, or a non-positive displacement turbo compressor of a centrifugal or axial-flow type.

12. A method for concentration recovery of a component in a fluid utilizing renewable energy, wherein a heat exchanger is provided at a discharge port of a pump described in claims 1 to 6 or within a piping flow path of a discharged fluid, or at a discharge port of a compressed fluid from the compressor described in claim 8 or within a piping flow path of the compressed fluid, the heat exchanger being supplied with at least one of cold heat held by river water, lake water or seawater, and cold heat held by geothermal heat, groundwater heat, or snow and ice heat, or a radiator fan is provided to recover a specific component concentrated and recovered from a fluid by cooling the specific component to lower the temperature thereof by outside air or by condensation liquefying or solidifying the specific component.

13. A method for concentration recovery of a component in a fluid utilizing renewable energy, wherein a heat exchanger is provided at a discharge port of a pump described in claim 1 or 4 or within a piping flow path of a discharged fluid, and an absorption chiller or adhesion chiller is further provided, the chiller driven by high-temperature heat held by hot water drained from a gas-liquid separator of the geothermal fluid described in claim 1 or 4, or steam, warm water or a heat medium obtained after driving a heat engine described in claim 1 or 4 as a heat source, and cold heat obtained by the chiller is supplied to the heat exchanger to recover a specific component concentrated and recovered from a fluid by cooling the specific component to lower the temperature thereof or by condensation liquefying or solidifying the specific component.

14. A method for concentration recovery of a component in a fluid utilizing renewable energy, wherein a heat exchanger is provided at a discharge port of a pump described in claim 2 or 5 or within a piping flow path of a discharged fluid, and cold heat obtained from flowing water after driving a hydraulic engine described in claim 2 or 5 is supplied to the heat exchanger to recover a specific component concentrated and recovered from a fluid by cooling the specific component to lower the temperature thereof or by condensation liquefying or solidifying the specific component.

15. A method for concentration recovery of a component in a fluid utilizing renewable energy, wherein at least one of a radiator dissipating heat in outside air and an electric heat pump chiller is provided at a discharge port of a pump described in claim 3 or 6 or within a piping flow path of a discharged fluid, to recover a specific component concentrated and recovered from a fluid by cooling the specific component to lower the temperature thereof or by condensation liquefying or solidifying the specific component by dissipating heat or delivering cold air.

16. A method for concentration recovery of a component in a fluid utilizing renewable energy, wherein, in the method for concentration recovery of a component in a fluid described in claims 1 to 15, there are provided: a measuring instrument located at a discharge port of a pump or compressor, within a piping flow path of a discharged fluid, or within a flow path of piping discharging a non-specific component that does not pass through a separation membrane, the measuring instrument measuring at least one of temperature, pressure, flow rate, and concentration of a concentrated and recovered fluid or a fluid of the non-specific component generated in a process of concentration recovery; at least one flow rate control valve located at a suction port, outlet, or within a piping flow path where the concentrated and recovered fluid or the fluid of the non-specific component generated in the process of concentration recovery flows; and further, a control unit controlling at least one of the temperature, pressure, flow rate, and concentration of a component in a fluid being concentrated and recovered by controlling opening of the flow rate control valve based on a measurement value obtained from the measuring instrument.

17. A method for concentration recovery of a component in a fluid utilizing renewable energy, wherein a steam turbine generator or binary generator driven by high-temperature heat held by hot water drained from a gas-liquid separator for the geothermal fluid described in claim 1 or 4, or steam, warm water, or a heat medium obtained after driving a heat engine described in claim 1 or 4 as a heat source is further provided, and power obtained from the generator is supplied to at least any one of the absorption chiller and adhesion chiller described in claim 13, the measuring instrument, flow rate control valve, and control unit described in claim 16.

18. A method for concentration recovery of a component in a fluid utilizing renewable energy, wherein a hydraulic generator driven by flowing water after driving a hydraulic engine described in claim 2 or 5 is further provided, and power obtained from the generator is supplied to at least any one of a water pump supplying flowing water to a heat exchanger described in claim 14, the measuring instrument, flow rate control valve, and control unit described in claim 16 for operating thereof.

19. A method for concentration recovery of a component in a fluid utilizing renewable energy, wherein a wind power generator is further provided near a wind power engine described in claim 3 or 6, and power obtained from the generator is supplied to at least any one of a blast fan mounted on a radiator, electric heat pump chiller described in claim 15, the measuring instrument, flow rate control valve, and control unit described in claim 16 for operating thereof.

20. A method for concentration recovery of a component in a fluid utilizing renewable energy, wherein a fluid supplied to a suction port of a pump described in claims 1 to 6 is any of biogas, combustion exhaust gas and air, and the separation membrane described in claims 1 to 7 is either a carbon dioxide separation membrane or a methane separation membrane.

21. A device of renewable energy utilization type for concentration recovery of a specific component in a fluid, which separates, concentrates and recovers a specific component contained in a fluid by utilizing renewable energy by applying the method for concentration recovery of a component in a fluid utilizing renewable energy described in claims 1 to 20.
